# FASCICULE DE BREVET EUROPEEN

(11) **EP 2 956 260 B1**
(45) Date de publication et mention de la délivrance du brevet: **03.04.2019**
(21) Numéro de dépôt: 14704146.1
(22) Date de dépôt: 12.02.2014
(51) Int. Cl.: B22F 3/105, B22F 5/00, B29C 64/153, B29C 64/40, B29D 30/06, B33Y 10/00, B33Y 80/00

(54) **PIÈCE OBTENUE PAR FUSION SÉLECTIVE D'UNE POUDRE COMPRENANT UN ÉLÉMENT PRINCIPAL ET DES ÉLÉMENTS SECONDAIRES RIGIDES**
DURCH SELEKTIVES SCHMELZEN EINES PULVERS HERGESTELLTES TEIL MIT EINEM HAUPTELEMENT UND STARREN SEKUNDÄRELEMENTEN
PART OBTAINED BY SELECTIVE MELTING OF A POWDER COMPRISING A MAIN ELEMENT AND RIGID SECONDARY ELEMENTS

(30) Priorité: 15.02.2013 FR 1351325
(43) Date de publication de la demande: 23.12.2015
(73) Titulaire: Compagnie Générale des Etablissements Michelin, 63000 Clermont-Ferrand (FR)
(72) Inventeur: BLANCHET, Etienne, F-63040 Clermont-Ferrand Cedex 9 (FR)
(74) Mandataire: Demaure, Pierre-Yves
(86) Numéro de dépôt international: PCT/EP2014/052730
(87) Numéro de publication internationale: WO 2014/124969

(56) Documents cités:
- WO-A1-97/11837
- WO-A1-2012/131481
- WO-A2-2010/072960
- US-A1- 2004 031 780

## Description

### DOMAINE DE L'INVENTION

La présente invention concerne la fabrication d'éléments de moule pour la vulcanisation et le moulage de pneumatiques et plus particulièrement la fabrication d'éléments de moule obtenus par la fusion sélective d'une poudre.

### ETAT DE LA TECHNIQUE

Il est connu de réaliser un élément de moule par un procédé de fusion sélective, plus communément appelé frittage. Ce procédé utilise un faisceau énergétique pour fusionner une poudre. Par « faisceau énergétique », on entend un rayonnement électromagnétique (par exemple un faisceau laser) ou un faisceau de particules (par exemple un faisceau d'électrons).

Un procédé de frittage utilisant un laser, ci-après dénommé procédé de frittage laser, est connu du document EP1641580. Dans ce document, une première couche de poudre est étalée sur un plateau support via un organe de mise en couche. Tout ou partie des grains de la poudre de cette première couche de poudre est ensuite aggloméré par le faisceau du laser en fonction de la forme de l'objet que l'on souhaite obtenir. Une fois cette étape effectuée, une seconde couche de poudre est étalée sur la première couche de poudre pour être à son tour fusionnée sélectivement par laser. En répétant ces opérations d'étalement de couche et de fusion par laser, on construit couche par couche un objet fritté.

Le document WO2010072960 divulgue un procédé de fabrication d'un élément de moule par frittage. L'élément de moule comprend ainsi un cordon, noté 24 dans le document, et des ailettes 26. Dans ce procédé, on vient réaliser en même temps que cet élément de moule des éléments secondaires. Les éléments secondaires comprennent notamment des parties de soutien 36 et des parties de jonction notés 28. Les parties de soutien ont une épaisseur correspondant sensiblement à l'épaisseur de la de l'élément de moule et les parties de jonction ont une épaisseur plus faible que ces parties de soutien de sorte qu'ils peuvent former des lignes de brisure facilitant le détachement de l'élément de moule par rapport au plateau support. Or la fabrication des éléments secondaires est coûteuse puisqu'elle nécessite de fusionner une grande quantité de poudre. En outre, l'usage de ces éléments secondaires est limité puisqu'ils sont mis au rebut une fois l'élément de moule détaché du plateau support.
Le document WO 97/11837 A1 divulgue un procédé de fabrication d'une pièce obtenue par fusion sélective d'une poudre sur un plateau support, cette pièce comprenant un élément principal et des éléments secondaires rigides.

Il existe donc un besoin d'optimiser l'utilisation des éléments secondaires lors de la réalisation d'un élément de moule par frittage, en vue de rendre moins coûteuse leur fabrication.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « moule », on entend un ensemble d'éléments de moule séparés qui, par rapprochement relatif, permettent de délimiter un espace de moulage toroïdal pour la vulcanisation et le moulage d'un pneumatique.

Par « élément de moule », on entend une partie d'un moule. Un élément de moule est par exemple une partie d'une garniture destinée à mouler des éléments en relief dans la bande de roulement du pneumatique.

### RESUME DE L'INVENTION

L'invention concerne une pièce obtenue par fusion sélective d'une poudre sur un plateau support. Cette pièce comprend un élément principal et une pluralité d'éléments secondaires rigides disposés entre l'élément principal et le plateau support. Tout ou partie des éléments secondaires comprend un corps d'épaisseur E et une tête de largeur L supérieure à l'épaisseur E de ce corps. Le corps est relié au plateau support et la tête est reliée à l'élément principal. Tout ou partie des éléments secondaires comprend une zone de raccordement entre la tête et le corps. La tête de l'élément secondaire s'étend sur au plus la moitié de la hauteur H de cet élément. La zone de raccordement présente un rayon R de raccordement, ledit rayon R de raccordement étant compris entre 1 et 20 mm.

L'invention propose de fabriquer au cours d'une même opération de fabrication un élément principal et des éléments secondaires en vue de former une pièce frittée. Comme ces éléments secondaires sont disposés sous l'élément principal, ceux-ci vont soutenir l'élément principal au cours de sa fabrication. Une fois l'élément principal fabriqué, les éléments secondaires facilitent également la désolidarisation de l'élément principal par rapport au plateau support. Du fait de la mise en couche de la poudre, les éléments secondaires sont soumis à des sollicitations importantes lors de la fabrication de l'élément principal. En prévoyant des zones de raccordement entre les corps et les têtes des éléments secondaires, on renforce la tenue mécanique des éléments secondaires et on améliore en conséquence la fabrication de l'élément principal. En outre, en limitant l'épaisseur de la tête, on limite la consommation de poudre pour réaliser l'élément secondaire.

Dans une variante de réalisation, la tête de l'élément secondaire s'étend sur au plus 1/3 de la hauteur H de l'élément secondaire.

En limitant davantage l'épaisseur de la tête on limite encore plus la consommation de matière dans la réalisation de l'élément secondaire.

Selon la présente invention, la zone de raccordement présente un rayon R de raccordement.

En prévoyant un raccordement arrondi progressif, on simplifie le raccord entre la tête et le corps de l'élément secondaire et on limite en conséquence le risque de génération de fissures au niveau de la zone de raccordement.

Dans une variante de réalisation, la tête s'élargie progressivement à partir du corps selon une ouverture α.

De cette manière, on peut soutenir au maximum l'élément principal tout en minimisant le contact entre les éléments secondaires et le plateau support. En outre, l'élargissement progressif donné à la tête limite la création d'amorces de rupture dans les éléments secondaires, ce qui garantit une plus grande résistance mécanique de ces éléments secondaires.

L'ouverture de la tête est comprise entre 20° et 140°.

Avec une telle ouverture, on garantit un bon soutien de l'élément principal par les éléments secondaires.

Préférentiellement, l'ouverture de la tête est comprise entre 90° et 120°.

Dans une autre variante de réalisation, la largeur de la tête est au moins égale à 2 fois l'épaisseur du corps.

De cette manière, on améliore le soutien de l'élément principal par les éléments secondaires.

Dans une autre variante de réalisation, les têtes des éléments secondaires se rejoignent au niveau de l'élément principal, de sorte que l'élément principal repose entièrement sur ces éléments secondaires.

En faisant reposer entièrement l'élément principal sur les têtes des éléments secondaires, on améliore la fabrication de cet élément principal. En effet, les têtes des éléments secondaires sont constituées par de la poudre fusionnée. L'ensemble des têtes forme alors un support continu sur lequel on va pouvoir déposer et fusionner de manière adéquate la première couche de poudre constitutive de l'élément principal.

Dans une autre variante de réalisation, la tête comprend des moyens de désolidarisation de l'élément principal avec l'élément secondaire.

On facilite ainsi la séparation de l'élément principal avec les éléments secondaires, une fois cet élément principal fabriqué.

Dans une autre variante de réalisation, tout ou partie des éléments secondaires présente un corps incliné faisant, avec le plateau support, un angle β supérieur ou égal à 20°.

De cette manière, on peut orienter les éléments secondaires en opposition avec la direction de la mise en couche de la poudre. Ceci permet aux éléments secondaires de mieux absorber les efforts liés à cette mise en couche lors de la fabrication de la pièce.

Un autre objet de l'invention concerne un procédé de fabrication d'un élément de moule destiné à être placé dans un moule pour la vulcanisation et le moulage d'une bande de roulement d'un pneumatique, cet élément de moule étant réalisé par fusion sélective d'une poudre sur un plateau support. Le procédé comprend la réalisation d'une pluralité d'éléments secondaires, tout ou partie de ces éléments secondaires comprenant un corps d'épaisseur E et une tête de largeur L supérieure à l'épaisseur E du corps, le corps étant relié au plateau support et la tête étant reliée à l'élément de moule. Tout ou partie des éléments secondaires comprend une zone de raccordement entre la tête et le corps, la tête de l'élément secondaire s'étendant sur au plus la moitié de la hauteur H de cet élément. La zone de raccordement présente un rayon R de raccordement, ledit rayon R de raccordement étant compris entre 1 et 20 mm. Le procédé comprend en outre une étape de désolidarisation de l'élément de moule avec les éléments secondaires.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en coupe d'une pièce comprenant une pluralité d'éléments secondaires;
- la **figure 2** représente schématiquement un agrandissement de l'élément secondaire de la **figure 1****;**
- la **figure 3** représente schématiquement un élément secondaire selon un mode de réalisation de l'invention ;
- la **figure 4** représente schématiquement un élément secondaire selon un second mode de réalisation de l'invention ;
- la **figure 5** représente une pluralité d'éléments secondaires;
- la **figure 6** représente des éléments secondaires;
- la **figure 7** représente un élément secondaire;
- la **figure 8** représente les étapes d'un procédé de fabrication d'une pièce conforme à la présente invention.

Dans la description qui va suivre, des éléments sensiblement identiques ou similaires seront désignés par des références identiques.

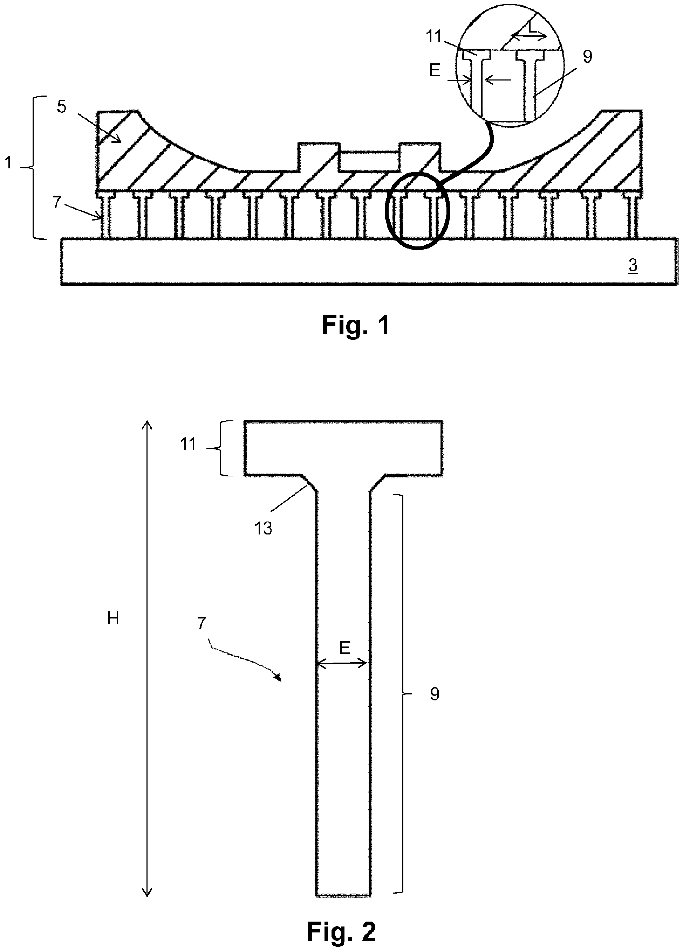

La **figure 1** présente schématiquement une vue en coupe d'une pièce 1 obtenue par fusion sélective d'une poudre sur un plateau support 3. Cette pièce 1 comprend un élément principal 5. Cet élément principal 5 forme, ici, un élément de moule pour la vulcanisation et le moulage de tout ou partie d'une bande de roulement d'un pneumatique. La pièce 1 comprend également une pluralité d'éléments secondaires 7 régulièrement répartis entre l'élément principal 5 et le plateau support 3. La section de ces éléments secondaires comprend un corps 9 relié au plateau support 3 et une tête 11 reliée à l'élément principal 5. Plus particulièrement, la tête 11 a une largeur L supérieure à l'épaisseur E du corps 9.

Comme il a déjà été précisé, l'élément principal 5 et les éléments secondaires 7 sont formés par fusion sélective d'une poudre, cette poudre pouvant être une poudre métallique, minérale (céramique) ou plastique. La poudre peut également être un mélange de différents types de poudre.

La **figure 2** présente une vue agrandie d'un élément secondaire de la **figure 1****.** Cet élément comprend une zone de raccordement 13 entre la tête 11 et le corps 9. La tête 11 de l'élément secondaire s'étend sur au plus la moitié de la hauteur H de l'élément 7. Préférentiellement, la tête 11 s'étend sur au plus le 1/3 de la hauteur H de l'élément secondaire.

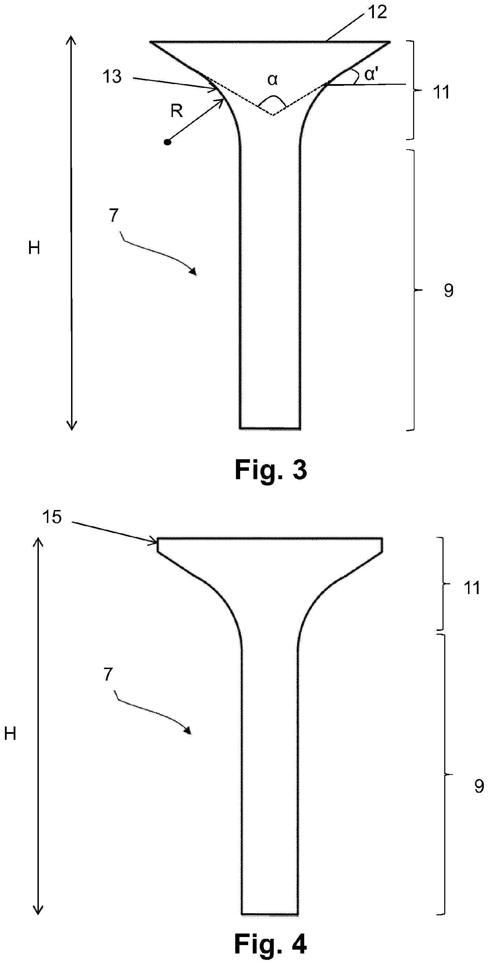

La **figure 3** présente une vue d'un élément secondaire selon la présente invention dans laquelle la tête 11 de l'élément secondaire comporte une zone de raccordement 13. Cette zone de raccordement a ici la forme d'un rayon de raccordement R. Ce rayon de raccordement est compris entre 1 et 20 mm, en fonction de l'importance de la longueur de la tête 11 de l'élément secondaire. La tête (11) de l'élément secondaire (7) s'étend sur au plus la moitié de la hauteur H de cet élément. Dans ce mode de réalisation, la tête 11 s'élargie progressivement à partir de la zone de raccordement 13 selon une ouverture a. Cette ouverture a est, ici, comprise entre 20° et 140°. Dis autrement, la tête 11 présente une section globalement triangulaire dont un des côtés 12 forme un support pour le soutien de l'élément principal 5. Les deux autres côtés 14 du triangle forment un angle α' avec une direction parallèle au côté 12 du triangle. Cet angle α' est compris entre 20° et 80°. De cette manière, il est possible de prévoir des éléments secondaires avec une tête 11 présentant une largeur suffisante pour soutenir l'élément principal, tout en ayant un corps 9 relativement mince.

Préférentiellement, l'ouverture de la tête est comprise entre 90° et 120°.

La **figure 4** présente une autre variante de réalisation dans laquelle la tête 11 comprend un bord de tête 15 de section triangulaire. Ce bord de tête 15 permet d'améliorer le contact entre les différents éléments secondaires en vue d'obtenir une surface continue sur laquelle il sera possible de monter l'élément principal 5.

On notera que dans les exemples des **figures 1 à 4****,** la largeur de la tête 11 est bien supérieure à l'épaisseur E du corps 9. Plus particulièrement, la largeur de la tête est au moins égale à 2 fois cette épaisseur. A titre d'exemple, l'épaisseur E du corps est comprise entre 0,1 et 0,5 mm et préférentiellement cette épaisseur est égale à 0,3 mm.

Dans le cas des modes de réalisation des figures **3** à **4** où la tête s'élargit progressivement, on entendra par largeur de la tête 11 la largeur moyenne de cette tête.

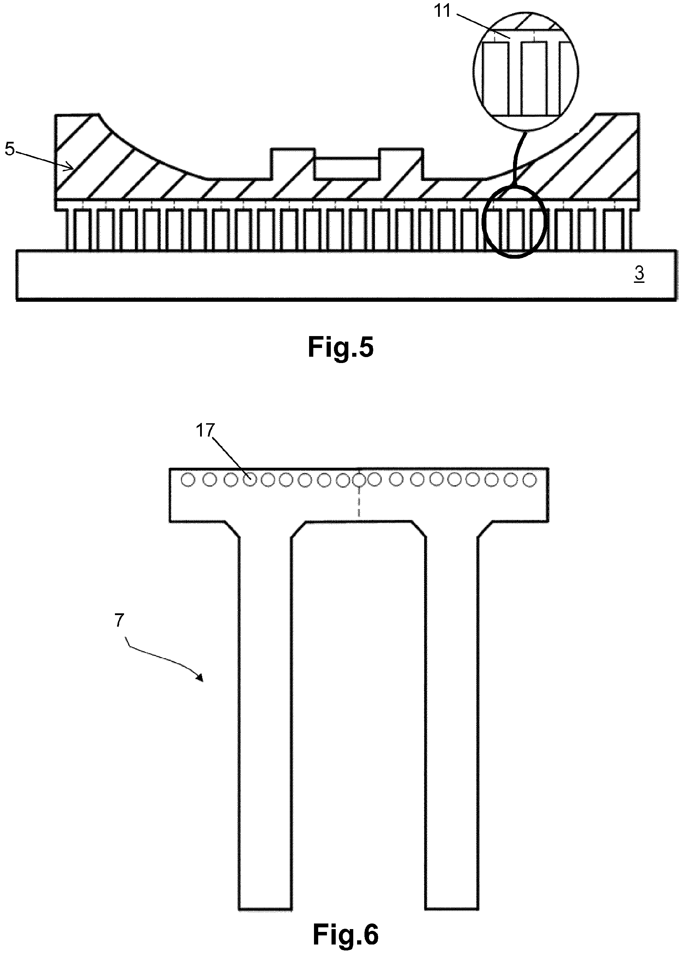

La **figure 5** présente schématiquement une vue en coupe d'une pièce dans laquelle les têtes 11 des éléments secondaires 7 se rejoignent au niveau de l'élément principal 5. Ainsi, l'élément principal 5 repose entièrement sur les éléments secondaires 7, ces éléments secondaires étant régulièrement répartis sous cet élément principal 5.

La **figure 6** présente un élément secondaire 7 comprenant des moyens de désolidarisation 17 de cet élément 7 avec l'élément principal. Ces moyens de désolidarisation sont ici représentés sous la forme de trous contigus.

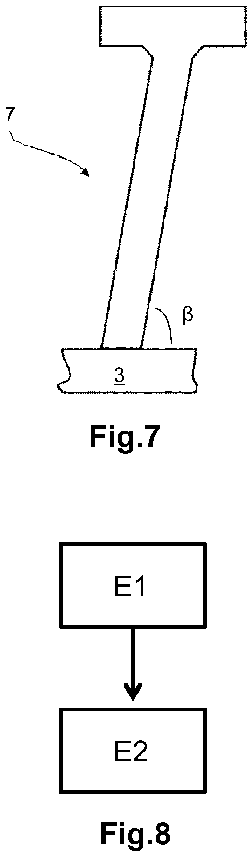

La **figure 7** présente des éléments secondaires 7 étant inclinés par rapport au plateau support 3. Ces éléments secondaires 7 forment ainsi un angle β supérieur ou égal à 20° avec le plateau support 3.

La **figure 8** illustre un procédé de fabrication d'un élément de moule. Ce procédé comprenant une étape El de réalisation d'éléments secondaires rigides sous l'élément de moule. Ces éléments secondaires comprennent, ainsi, un corps et une tête de largeur supérieure à l'épaisseur du corps. Tout ou partie des éléments secondaires comprend également une zone de raccordement entre la tête et le corps. La zone de raccordement présente un rayon R de raccordement, ledit rayon R de raccordement étant compris entre 1 et 20 mm. De plus, la tête de l'élément secondaire s'étend sur au plus la moitié de la hauteur H de cet élément. Le procédé comprend également une étape E2 de désolidarisation des éléments secondaires avec l'élément de moule.

Aux **figures 1** et **5****,** l'élément principal a été représenté comme ayant une surface inférieure plane, c'est-à-dire une surface de contact avec les éléments secondaires plane. En variante, cette surface inférieure peut présenter un profil non plan. Par exemple, cette surface inférieure peut comprendre une ou plusieurs courbures. Dans ce cas, les éléments secondaires présentent des hauteurs différentes afin de suivre ces courbures.

En outre, sur les **figures 1** et **5** les éléments secondaires s'étendent dans la largeur de l'élément principal, c'est-à-dire selon une direction perpendiculaire au plan de coupe de ces figures. En variante, les éléments secondaires peuvent s'étendre dans la longueur de l'élément principal.

Enfin, l'invention peut s'appliquer à la fabrication de tout type d'éléments autres que des éléments de moule.

## Revendications

1. Pièce obtenue par fusion sélective d'une poudre sur un plateau support (3), cette pièce (1) comprenant un élément principal (5) destiné à être placé dans un moule pour la vulcanisation et le moulage d'une bande de roulement d'un pneumatique et des éléments secondaires (7) rigides, ces éléments secondaires étant disposés entre l'élément principal (5) et le plateau support (3), les éléments secondaires étant destinés à être désolidarisés de l'élément principal (5), **caractérisée en ce que** tout ou partie des éléments secondaires (7) comprend un corps (9) d'épaisseur E et une tête (11) de largeur L supérieure à l'épaisseur E de ce corps (9), le corps (9) étant relié au plateau support (3) et la tête (11) étant reliée à l'élément principal (5) et **en ce que** tout ou partie des éléments secondaires (7) comprend une zone de raccordement (13) entre la tête (11) et le corps (9) et **en ce que** la tête (11) de l'élément secondaire s'étend sur au plus la moitié de la hauteur H de cet élément (7) et **en ce que** la zone de raccordement (13) présente un rayon R de raccordement, ledit rayon R de raccordement étant compris entre 1 et 20 mm.

2. Pièce selon la revendication 1, **caractérisée en ce que** la tête (11) de l'élément secondaire (7) s'étend sur au plus 1/3 de la hauteur H de l'élément secondaire.

3. Pièce selon l'une quelconque des revendications 1 à 2, **caractérisée en ce que** la tête (11) s'élargie progressivement à partir de la zone de raccordement (13) selon une ouverture a.

4. Pièce selon la revendication 3, **caractérisée en ce que** l'ouverture α de la tête (11) est comprise entre 20° et 140°.

5. Pièce selon l'une des revendications 3 à 4, **caractérisée en ce que** l'ouverture α de la tête (11) est comprise entre 90° et 120°.

6. Pièce selon l'une quelconque des revendications précédentes, **caractérisée en ce que** la largeur L de la tête (11) est au moins égale à 2 fois l'épaisseur E du corps (9).

7. Pièce selon l'une quelconque des revendications 1 à 6, **caractérisée en ce que** les têtes (11) des éléments secondaires (7) se rejoignent au niveau de l'élément principal (5), de sorte que cet élément principal (5) repose entièrement sur les éléments secondaires (7).

8. Pièce selon l'une quelconque des revendications 1 à 7, **caractérisée en ce que** la tête (11) comprend des moyens de désolidarisation (17) de l'élément principal (5) avec les éléments secondaires (7).

9. Pièce selon l'une quelconque des revendications 1 à 8, **caractérisée en ce que** les éléments secondaires (7) sont inclinés par rapport au plateau support (3), ces éléments secondaires formant respectivement un angle β supérieur ou égal à 20° avec ce plateau support (3).

10. Procédé de fabrication d'un élément de moule (5) destiné à être placé dans un moule pour la vulcanisation et le moulage d'une bande de roulement d'un pneumatique, cet élément de moule (5) étant réalisé par fusion sélective d'une poudre sur un plateau support (3), le procédé comprenant une étape (E1) de réalisation d'éléments secondaires (7) rigides sous l'élément de moule (5), tout ou partie de ces éléments secondaires (7) comprenant un corps (9) d'épaisseur E et une tête (11) de largeur L supérieure à l'épaisseur E du corps, le corps (9) étant relié au plateau support (3) et la tête (11) étant reliée à l'élément de moule (5), tout ou partie des éléments secondaires (11) comprenant une zone de raccordement (13) entre la tête (11) et le corps (9), la tête (11) de l'élément secondaire s'étendant sur au plus la moitié de la hauteur H de cet élément (7), la zone de raccordement (13) présentant un rayon R de raccordement, ledit rayon R de raccordement étant compris entre 1 et 20 mm, le procédé comprenant une étape (E2) de désolidarisation des éléments secondaires (7) avec l'élément de moule (5).

## Patentansprüche

1. Teil, das durch selektives Schmelzen eines Pulvers auf einer Tragplatte (3) hergestellt ist, wobei dieses Teil (1) ein Hauptelement (5), das dazu bestimmt ist, in einer Form zur Vulkanisation und Formung eines Laufbandes eines Reifens angeordnet zu sein, und starre Sekundärelemente (7) umfasst, wobei diese Sekundärelemente zwischen dem Hauptelement (5) und der Tragplatte (3) angeordnet sind, wobei die Sekundärelemente dazu bestimmt sind, von dem Hauptelement (5) getrennt zu sein, **dadurch gekennzeichnet, dass** alle oder ein Teil der Sekundärelemente (7) einen Körper (9) mit der Dicke E und einen Kopf (11) mit der Breite L größer als die Dicke E dieses Körpers (9) umfassen, wobei der Körper (9) mit der Tragplatte (3) verbunden ist, und der Kopf (11) mit dem Hauptelement (5) verbunden ist, und dass alle oder ein Teil der Sekundärelemente (7) eine Anschlusszone (13) zwischen dem Kopf (11) und dem Körper (9) umfassen, und dass sich der Kopf (11) des Sekundärelements auf höchstens der Hälfte der Höhe H dieses Elements (7) erstreckt, und dass die Anschlusszone (13) einen Anschlussradius R aufweist, wobei der Anschlussradius R zwischen 1 und 20 mm beträgt.

2. Teil nach Anspruch 1, **dadurch gekennzeichnet, dass** sich der Kopf (11) des Sekundärelements (7) auf höchstens 1/3 der Höhe H des Sekundärelements erstreckt.

3. Teil nach einem der Ansprüche 1 bis 2, **dadurch gekennzeichnet, dass** sich der Kopf (11) progressiv von der Anschlusszone (13) gemäß einer Öffnung α erweitert.

4. Teil nach Anspruch 3, **dadurch gekennzeichnet, dass** die Öffnung α des Kopfes (11) zwischen 20° und 140° beträgt.

5. Teil nach einem der Ansprüche 3 bis 4, **dadurch gekennzeichnet, dass** die Öffnung α des Kopfes (11) zwischen 90° und 120° beträgt.

6. Teil nach einem der vorhergehenden Ansprüche, **dadurch gekennzeichnet, dass** die Breite L des Kopfes (11) mindestens gleich zweimal die Dicke E des Körpers (9) ist.

7. Teil nach einem der Ansprüche 1 bis 6, **dadurch gekennzeichnet, dass** sich die Köpfe (11) der Sekundärelemente (7) im Bereich des Hauptelements (5) verbinden, so dass dieses Hauptelement (5) zur Gänze auf den Sekundärelementen (7) aufliegt.

8. Teil nach einem der Ansprüche 1 bis 7, **dadurch gekennzeichnet, dass** der Kopf (11) Mittel (17) zum Trennen des Hauptelements (5) von den Sekundärelementen (7) umfasst.

9. Teil nach einem der Ansprüche 1 bis 8, **dadurch gekennzeichnet, dass** die Sekundärelemente (7) in Bezug zur Tragplatte (3) geneigt sind, wobei diese Sekundärelemente jeweils einen Winkel β größer oder gleich 20° mit dieser Tragplatte (3) bilden.

10. Verfahren zur Herstellung eines Formelements (5), das dazu bestimmt ist, in einer Form zur Vulkanisation und Formung eines Laufbandes eines Reifens angeordnet zu sein, wobei dieses Formelement (5) durch selektives Schmelze eines Pulvers auf einer Tragplatte (3) hergestellt ist, wobei das Verfahren einen Schritt (E1) der Herstellung von starren Sekundärelementen (7) unter dem Formelement (5) umfasst, wobei alle oder ein Teil der Sekundärelemente (7) einen Körper (9) mit der Dicke E und einen Kopf (11) mit der Breite L größer als die Dicke E des Körpers umfassen, wobei der Körper (9) mit der Tragplatte (3) verbunden ist, und der Kopf (11) mit dem Hauptelement (5) verbunden ist, wobei alle oder ein Teil der Sekundärelemente (11) eine Anschlusszone (13) zwischen dem Kopf (11) und dem Körper (9) umfassen, wobei sich der Kopf (11) des Sekundärelements auf höchstens der Hälfte der Höhe H dieses Elements (7) erstreckt, wobei die Anschlusszone (13) einen Anschlussradius R aufweist, wobei der Anschlussradius R zwischen 1 und 20 mm beträgt, wobei das Verfahren einen Schritt (E2) der Trennung der Sekundärelemente (7) von dem Formelement (5) umfasst.

## Claims

1. Part obtained by selective melting of a powder on a support plate (3), this part (1) comprising a main element (5) and rigid secondary elements (7), these secondary elements being arranged between the main element (5) and the support plate (3), the secondary elements being intended to be detached from the main element (5), **characterized in that** all or part of the secondary elements (7) comprises a body (9) of thickness E and a head (11) of width L which is greater than the thickness E of this body (9), the body (9) being connected to the support plate (3) and the head (11) being connected to the main element (5) and **in that** all or part of the secondary elements (7) comprises a region of connection (13) between the head (11) and the body (9) and **in that** the head (11) of the secondary element extends over at most half the height H of this element (7) and **in that** the region of connection (13) has a blend radius R, said blend radius R being between 1 and 20 mm.

2. Part according to Claim 1, **characterized in that** the head (11) of the secondary element (7) extends over at most 1/3 of the height H of the secondary element.

3. Part according to any one of Claims 1 to 3, **characterized in that** the head (11) widens progressively from the region of connection (13) with a divergence a.

4. Part according to Claim 4, **characterized in that** the divergence α of the head (11) is between 20° and 140°.

5. Part according to one of Claims 4 and 5, **characterized in that** the divergence α of the head (11) is between 90° and 120°.

6. Part according to any one of the preceding claims, **characterized in that** the width L of the head (11) is at least equal to twice the thickness E of the body (9).

7. Part according to any one of Claims 1 to 7, **characterized in that** the heads (11) of the secondary elements (7) meet at the main element (5) so that this main element (5) rests entirely on the secondary elements (7).

8. Part according to any one of Claims 1 to 8, **characterized in that** the head (11) comprises means of detachment (17) for detaching the main element (5) from the secondary elements (7).

9. Part according to any one of Claims 1 to 9, **characterized in that** the secondary elements (7) are inclined with respect to the support plate (3), these secondary elements respectively forming an angle β greater than or equal to 20° with this support plate (3).

10. Method of manufacturing a moulding element (5) intended to be placed in a mould for vulcanizing and moulding a tyre tread, this moulding element (5) being created by selective melting of a powder on a support plate (3), the method comprising a step (E1) of creating rigid secondary elements (7) under the moulding element (5), all or part of these secondary elements (7) comprising a body (9) of thickness E and a head (11) of width L that is greater than the thickness E of the body, the body (9) being connected to the support plate (3) and the head (11) being connected to the moulding element (5), all or part of the secondary elements (11) comprising a region of connection (13) between the head (11) and the body (9), the head (11) of the secondary element extending over at most half the height H of this element (7), the region of connection (13) has a blend radius R, said blend radius R being between 1 and 20 mm the method comprising a step (E2) of detaching the secondary elements (7) from the moulding element (5).
